# FASCICULE DE BREVET EUROPEEN

(11) **EP 1 238 014 B1**
(45) Date de publication et mention de la délivrance du brevet: **23.07.2003**
(21) Numéro de dépôt: 00976122.2
(22) Date de dépôt: 08.11.2000
(51) Int. Cl.: C08L 83/04, C08K 13/02, C08K 3/22, C08K 3/34, H01B 3/46

(54) **COMPOSITIONS POLYORGANOSILOXANES VULCANISABLES A CHAUD UTILISABLES NOTAMMENT POUR LA FABRICATION DE FILS OU CABLES ELECTRIQUES**
HITZEHÄRTBARE POLYSILOXANZUSAMMENSETZUNGEN UND DEREN ANWENDUNG INSBESONDERE ZUR HERSTELLUNG VON ELEKTRISCHEN DRÄHTEN ODER KABELN
POLYORGANOSILOXANE COMPOSITIONS VULCANISABLE BY HOT PROCESS USEFUL IN PARTICULAR FOR MAKING ELECTRIC WIRES OR CABLES

(30) Priorité: 09.11.1999 FR 9914315
(43) Date de publication de la demande: 11.09.2002
(73) Titulaire: RHODIA CHIMIE, 92512 Boulogne Billancourt Cedex (FR)
(72) Inventeur: BRANLARD, Paul, F-69005 Lyon (FR); GEORGE, Catherine, F-69130 Ecully (FR); LEUCI, Christine, F-69008 Lyon (FR)
(74) Mandataire: Trolliet, Maurice
(86) Numéro de dépôt international: FR0003105
(87) Numéro de publication internationale: WO01034705

(56) Documents cités:
- EP-A- 0 467 800
- EP-A- 0 902 440
- US-A- 3 355 532
- US-A- 3 996 188
- PATENT ABSTRACTS OF JAPAN vol. 1996, no. 09, 30 septembre 1996 (1996-09-30) & JP 08 127716 A (SHIN ETSU CHEM CO LTD), 21 mai 1996 (1996-05-21)

## Description

La présente invention concerne des compositions polyorganosiloxanes vulcanisables à chaud en élastomères silicones, c'est-à-dire vulcanisables à des températures de la matière généralement comprises entre 100° et 200°C et pouvant au besoin aller jusqu'à 250°C. L'invention concerne encore l'utilisation de ces compositions pour notamment la réalisation des enveloppes ou isolants primaires entrant dans la constitution de fils ou câbles électriques protégés contre l'incendie. L'invention concerne enfin les fils ou câbles électriques protégés contre l'incendie qui sont fabriqués moyennant l'utilisation de pareilles compositions.

Par l'expression "fils ou câbles électriques protégés contre l'incendie", on entend définir des fils ou câbles électriques qui doivent garantir un comportement au feu de haute qualité en termes, au moins, de cohésion des cendres et d'opacité des fumées. Les caractéristiques que doivent présenter les fils ou câbles électriques protégés contre l'incendie, font l'objet de réglementations légales dans de nombreux pays et des normalisations rigoureuses ont été établies.

En France, par exemple, une norme importante relative aux essais de tenue au feu des câbles électriques, qu'il convient de satisfaire, est la norme NF C 32-070 CR1 qui concerne la durée de fonctionnement des câbles brûlant dans des conditions définies. La résistance au feu est à mettre sur le compte de la production de cendres qui doivent présenter une certaine cohésion permettant de conserver un isolement suffisant pour le fonctionnement des câbles. Dans cet essai, les échantillons de câbles sont placés dans un four dont la température atteint 920°C en 50 minutes et cette température est maintenue ensuite pendant 15 minutes ; durant cet essai, les câbles sont soumis à des chocs réguliers ; l'essai est satisfaisant si des lampes témoins, branchées sur les câbles alimentés à une tension nominale, ne sont pas éteintes à la fin de la durée de l'essai (c'est-à-dire au bout de 65 minutes).

Une autre norme importante relative aux essais de tenue au feu, qu'il convient aussi de satisfaire, est la norme internationale CEI 1034, parties 1 et 2 (CEI est l'abréviation de l'expression : Commission Electrotechnique Internationale), qui concerne la mesure de l'opacité des fumées dégagées par des câbles électriques brûlant dans des conditions définies. Dans cet essai, on mesure la transmission de lumière dans une petite chambre de 27 m³ obscurcie par les fumées produites en faisant brûler des tronçons de câbles sous faction d'une flamme d'alcool installée dans des conditions définies.

Les normes précitées ne peuvent être satisfaites que pour des fils ou câbles électriques dont au moins les matériaux isolants primaires ont été particulièrement étudiés vis-à-vis de leur non-propagation de l'incendie. En pratique, selon la technique antérieure connue, il a été constaté que les matériaux primaires isolants à base d'élastomères silicones obtenus par vulcanisation à chaud de compositions polyorganosiloxanes appropriées, peuvent satisfaire aux essais de non-propagation de la flamme. Lorsque l'élastomère silicone brûle, il se transforme en une substance cendreuse isolante ayant une certaine cohésion et il émet des fumées blanches qui proviennent de l'auto-inflammation des résidus volatils produits par la dégradation de l'élastomère. Toutefois, pareilles compositions proposées jusqu'ici ne sont pas totalement satisfaisantes et nécessitent encore des améliorations pour notamment obtenir des cendres plus cohésives, ce qui conduira en cas d'incendie à des temps plus longs de fonctionnement des câbles, et à des émissions plus réduites de fumées blanches afin de diminuer l'opacité des fumées et de réduire ainsi les temps d'intervention des services organisés pour combattre les incendies et les sinistres.

Un câble électrique est constitué, selon la technique antérieure connue, d'un ou plusieurs monoconducteur(s) (en général à base de Cu ou d'AI) ; chacun de ces monoconducteurs est protégé par une envoloppe ou isolant primaire fait d'une ou plusieurs couche(s) concentrique(s) à base d'élastomère silicone. Autour de cette enveloppe ou de ces enveloppes (dans le cas d'un câble à plusieurs monoconducteurs) est (sont) prévu(s) un ou plusieurs élément(s) de remplissage et/ou un ou plusieurs élément(s) de renfort à base notamment de fibres de verre et/ou de fibres minérales. Puis on procède ensuite au gainage extérieur pouvant comprendre une ou plusieurs gaine(s). Dans le cas d'un câble électrique à plusieurs monoconducteurs, le (ou les) élément(s) de remplissage et/ou le (ou les) élément(s) de renfort, qui est (sont) disposé(s) autour des monoconducteurs (équipés chacun de son isolant primaire), constitue(nt) une enveloppe commune à l'ensemble des monoconducteurs. Bien que l'élastomère silicone entrant dans la constitution des câbles soit essentiellement le matériau constitutif du (ou des) isolant(s) primaire(s), il peut être présent aussi, en proportions variables : dans le (ou les) élément(s) de remplissage et/ou dans le (ou les) élément(s) de renfort (constituant l'enveloppe commune dans le cas d'un câble à plusieurs monoconducteurs) ; et/ou dans la (ou les) gaine(s) extérieure(s).

Le nombre de couche(s) concentrique(s) à base d'élastomère silicone, constituant l'enveloppe ou isolant primaire de chaque monoconducteur, et l'épaisseur de paroi de chaque couche vont dépendre essentiellement des exigences imposées pour le maintien du fonctionnement selon les dispositions des normes et en particulier de la norme NFC 32-070 CR1. De manière générale, il est souhaitable d'obtenir un pareil fonctionnement moyennant l'utilisation d'une ou de deux couches ayant chacune, de façon appropriée, une épaisseur égale à au moins 0,6 mm et, de préférence, à au moins 0,8 mm.

Un but de la présente invention est donc la mise au point de compositions polyorganosiloxanes vulcanisables à chaud en élastomères silicones qui soient capables, déjà quand elles sont utilisées pour la seule réalisation de l'isolant primaire, de conférer aux fils et câbles électriques un comportement au feu de très haute qualité marqué, au moins, par la réalisation des points suivants :
- une amélioration de la cohésion des cendres permettant d'une part, pour toutes les compositions selon l'invention, de satisfaire à la norme NF C 32-070 CR1 sous 500 volts en allongeant de plus de 30 % le temps de fonctionnement des fils ou câbles par rapport au seuil de 65 minutes requis par la norme, et d'autre part, pour certaines compositions dites "très préférées", de satisfaire à la norme NF C 32-070 CR1 non seulement sous 500 volts, mais encore sous 1000 volts ;
- une amélioration de la réduction de l'opacité des fumées permettant d'atteindre, de manière générale, l'objectif de plus de 91 % de transmission selon la norme CEI 1034, parties 1 et 2.

Un autre but de la présente invention est aussi la mise au point de compositions polyorganosiloxanes vulcanisables à chaud qui, tout en possédant une tenue améliorée à la combustion, possèdent simultanément de bonnes propriétés mécaniques à l'état non recuit comme à l'état recuit et, en particulier, après un vieillissement de 10 jours à 200°C opéré selon la norme câble CEI 2 (en matières notamment : de dureté SHORE A, de résistance à la rupture, d'allongement à la rupture, de module élastique).

Dans l'état antérieur de la technique, on décrit des compositions polyorganosiloxanes vulcanisables à chaud en élastomères silicones où on fait appel, à côté d'un polymère polyorganosiloxane réticulant par une catalyse au péroxyde, à des charges de type fondant et/ou de type lamellaire qui peuvent être associées ou non à du platine et à des oxydes métalliques afin de donner naissance, dans le cas d'un incendie, à la formation d'une substance cendreuse isolante et ayant une certaine cohésion, permettant d'allonger le temps de fonctionnement des câbles qui sont en train de brûler. On citera en particulier le document EP-A-0 467 800 qui propose l'utilisation à la fois de ZnO (à tire de fondant) et de mica (à titre de charge lamellaire), associée éventuellement à un composé du platine et/ou des oxydes métalliques comme par exemple l'oxyde de titane et l'oxyde Fe₃O₄. Il a été constaté que les compositions et les élastomères silicones réticulés par une catalyse au péroxyde de dichloro-2,4 benzoyle, qui découlent de l'enseignement de ce document EP :
- permettent, pour certains d'entre eux, de passer la norme NF C 32-070 CR1 sous 500 volts avec un temps de fonctionnement qui plafonne à 79 minutes (soit un allongement du temps de fonctionnement insuffisant : il est au plus égal à 21,5 % par rapport au seuil de 65 minutes requis par la norme) ; mais sous 1000 volts, le câble présente un temps de fonctionnement trop court, ce qui ne lui permet pas de satisfaire à la norme ;
- conduisent à des caractéristiques en matière de la réduction de l'opacité des fumées qui plafonnent à 91 % de transmission de lumière selon la norme CEI 1034, parties 1 et 2.

Il a maintenant été trouvé, et c'est ce qui constitue le premier objet de la présente invention, des compositions polyorganosiloxanes vulcanisables à chaud en élastomères silicones, utilisables notamment dans le domaine de la fabrication de fils ou câbles électriques ayant un comportement au feu amélioré par rapport à ce qui se passe en mettant en oeuvre l'enseignement de l'art antérieur, avec comme objectif celui de procéder au moins à la réalisation des améliorations expliquées ci-avant touchant à la cohésion des cendres et à l'opacité des fumées.

Plus précisément, la présente invention, prise dans son premier objet, concerne des compositions contenant :
a) au moins un polymère polyorganosiloxane,
b) au moins une charge de renforcement,
c) un péroxyde organique,
d) du mica,
e) de l'oxyde de zinc,
f) éventuellement au moins un additif habituellement utilisé dans le domaine des compositions polyorganosiloxanes vulcanisables à chaud,
   lesdites compositions étant caractérisées en ce qu'elles contiennent en plus, à titre d'autres ingrédients obligatoires :
g) du platine, un composé du platine et/ou un complexe du platine,
h) de l'oxyde de titane,
i) au moins une charge de bourrage, et
j) au moins une espèce minérale appartenant au groupe de la wollastonite.

Ainsi la Demanderesse a découvert que l'association :
- d'au moins une charge de bourrage i) et d'au moins une espèce minérale j) appartenant au groupe de la wollastonite, avec
- les ingrédients minéraux conformes à l'enseignement du EP-A-0 467 800 constitués de mica, d'oxyde de zinc, de platine (ou d'un composé ou d'un complexe en contenant) et d'oxyde de titane (ces deux derniers ingrédients étant utilisés maintenant à titre obligatoire et non plus à titre optionnel, comme c'était le cas dans cet art antérieur), conduit à une action notable de renforcement dans l'élastomère fini, qui permet d'obtenir notamment dans l'application fils ou câbles électriques, une cohésion des cendres améliorée et une réduction de l'opacité de fumées selon les explications données ci-avant.

Ainsi les compositions selon la présente invention comprennent au moins un polymère polyorganosiloxane a) contenant de 0 à 4 %, de préférence de 0,01 à 3 %, en poids, de groupement vinylé. Lorsque ces polymères polyorganosiloxanes a) ont des viscosités à 25°C comprises entre 50.000 et 1.000.000 mPa.s, elles sont appelées huiles, mais leur viscosité peut être supérieure à 1.000.000 mPa.s et elles sont appelées alors des gommes. Dans les compositions selon la présente invention, les polymères polyorganosiloxanes peuvent être des huiles ou des gommes ou des mélanges. Ces polymères polyorganosiloxanes sont des polymères linéaires, dont la chaîne diorganopolysiloxanique est constituée essentiellement de motifs de formule R₂SiO. Cette chaîne est bloquée à chaque extrémité par un motif de formule R₃Si_{0,5} et/ou un radical de formule OR'. Dans ces formules :
- les symboles R. identiques ou différents, représentent des radicaux hydrocarbonés monovalents tels que des radicaux alkyles, par exemple, méthyle, éthyle, propyle, octyle ou octadécyle, des radicaux aryle, par exemple phényle, tolyle ou xylyle, des radicaux aralkyle tels que benzyle ou phényléthyle, des radicaux cycloalkyle et cycloalkényle tels que des radicaux cyclohexyle, cycloheptyle ou cyclohexényle, des radicaux alkényle, par exemple des radicaux vinyle ou allyle, des radicaux alkaryle, des radicaux cyanoalkyle tels qu'un radical cyanoéthyle, des radicaux halogénoalkyle, halogénoalkényle et halogénoaryle, tels que des radicaux chlorométhyle trifluoro-3,3,3 propyle, chlorophényle, dibromophényle, trifluorométhylphényle,
- le symbole R' représente un atome d'hydrogène, un radical alkyle ayant de 1 à 4 atomes de carbone, le radical bétaméthoxy-éthyle.

De préférence, au moins 60 % des groupes R représentent des radicaux méthyle. La présence, le long de la chaîne diorganopolysiloxanique, de faibles quantités de motifs autres que R₂SiO, par exemple de motifs de formule RSiO_{1,5} et/ou SiO₂ n'est cependant pas exclue dans la proportion d'au plus 2 % (ces % exprimant le nombre des motifs T et/ou Q pour 100 atomes de silicium).

A titre d'exemples concrets de motifs de formules R₂SiO et R₃SiO_{0,5} et de radicaux de formule OR', peuvent être cités ceux de formules :

(CH₃)₂SiO, CH₃(CH₂=CH)SiO, CH₃(C₆H₅)SiO, (C₆H₅)₂SiO,

CH₃(C₂H₅)SiO, (CH₃CH₂CH₂) CH₃SiO, CH₃(n.C₃H₇)SiO,

(CH₃)₃SiO_{0,5}, (CH₃)₂(CH₂=CH)SiO_{0,5}, CH₃(C₆H₅)₂SiO_{0,5},

CH₃(C₆H₅) (CH₂=CH)SiO_{0,5},

OH, -OCH₃, -OC₂H₅, -O-n. C₃H₇, -O-iso.C₃H₇, -O-n.C₄H₉,

-OCH₂CH₂OCH₃.

Ces huiles et gommes sont commercialisées par les fabricants de silicone ou peuvent être fabriquées en opérant selon des techniques déjà connues.

La charge de renforcement b) consiste dans la silice, l'alumine ou un mélange de ces deux espèces. A titre de silice utilisables, on vise des charges caractérisées par une fine taille de particules souvent inférieure ou égale à 0,1 µm et un rapport élevé de la surface spécifique au poids, généralement compris dans l'intervalle d'environ 50 mètres carrés par gramme à plus de 300 mètres carrés par gramme. Les silices de ce type sont des produits disponibles dans le commerce et sont bien connues dans la technique de la fabrication des caoutchoucs de silicone. Ces silices peuvent être préparées par voie pyrogénique (silices dites de combustion ou de fumée) ou par des procédés humides (silices précipitées) et peuvent être traitées ou non traitées par des composés organosiliciques habituellement utilisées pour cet usage. La nature chimique et le procédé de préparation ne sont pas importants aux fins de la présente invention, pourvu que la silice soit capable d'exercer une action de renforcement dans l'élastomère fini. Bien entendu on peut utiliser aussi des coupages de différentes silices. A titre d'alumine de renforcement utilisable, on emploie avantageusement une alumine hautement dispersible, dopée ou non de manière connue. Bien entendu, on peut utiliser aussi des coupages de différentes alumines. Comme exemples non limitatifs de pareilles alumines, on citera les alumines A 125, CR 125, D 65CR de la société BAÏKOWSKI. De préférence, la charge de renforcement utilisée est une silice de combustion, prise seule ou en mélange avec de l'alumine.

Le péroxyde organique constituant l'ingrédient c) peut être n'importe lequel de ceux qui agissent comme agents vulcanisants envers les compositions formatrices d'élastomères de silicones. Il peut ainsi s'agir de l'un quelconque des péroxydes ou peresters qu'il est connu d'employer avec les élastomères de silicone, par exemple le péroxyde de ditertiobutyle, le péroxyde de benzoyle, le peracétate de tertiobutyle, le péroxyde de dicumyle, le 2,5-diperbenzoate de 2,5-diméthylhexane et le bis(t-butylpéroxy)-2,5 diméthyl-2,5 hexane. Le choix du péroxyde dépendra en pratique du procédé employé pour durcir l'élastomère. Pour la plupart des applications, en particulier lorsque l'isolant est appliqué par extrusion comme c'est le cas dans la fabrication de câbles ou de fils électriques, on utilisera un péroxyde qui est actif en l'absence de pression exercée, par exemple le péroxyde de monochlorobenzoyle ou le péroxyde de 2-4 dichlorobenzoyle.

Le mica qui constitue l'ingrédient d) des compositions de la présente invention peut être de type muscovite ou de type phlogopite et la grosseur des particules de mica n'est pas spécialement critique, pourvu qu'elle soit suffisamment petite pour permettre une dispersion uniforme dans les ingrédients de la composition. Le mica est apporté de préférence sous forme de mica pulvérisé ou de farine de mica ayant des particules de dimension inférieure à 100 µm.

L'oxyde de zinc qui constitue l'ingrédient e) des compositions selon la présente invention est une poudre blanche ou légèrement jaunâtre.

Le platine, ingrédient g), peut être : sous forme de platine métallique (élémentaire) ; ou sous forme notamment d'acide chloroplatinique (par exemple l'acide hexachloroplatinique H₂PtCl₆) ; ou sous forme de complexes du platine et de produits organiques : comme notamment les complexes du platine et d'organosiloxanes vinylés (par exemple le complexe de Karstedt), les complexes tels que ceux de formule (PtCl₂, oléfine)₂ et H(PtCl₃, oléfine) où l'oléfine représente l'éthylène, le propylène, le butylène, le cyclohexène ou le styrène, les complexes de chlorure de platine et de cyclopropane.

L'oxyde de titane h) est une poudre blanche.

La charge de bourrage i) est le plus généralement une silice cristalline. Pareille charge présente souvent une taille de particules supérieure à 0,1 µm. Ces charges i) sont représentées plus spécialement par le quartz broyé et les silices de diatomées. Bien entendu, on peut utiliser aussi des coupages de différentes silices cristallines. De préférence, la charge de bourrage i) est du quartz broyé.

Les compositions selon la présente invention contiennent encore, à titre d'ingrédient obligatoire, au moins une espèce minérale j) appartenant au groupe de la wollastonite. Le groupe de la wollastonite comprend les espèces minérales suivantes : le métasilicate de calcium (CaSiO₃) ou wollastonite ; le métasilicate mixte de calcium et de sodium (NaCa₂HSi₃O₉) ou pectolite ; et le métasilicate mixte de calcium et de manganèse [CaMn(SiO₃)₂] ou bustamite. Bien entendu on peut utiliser un mélange de ces différentes espèces. De préférence, l'ingrédient j) utilisé est une wollastonite. La wollastonite existe sous deux formes : la wollastonite elle-même, que les chimistes désignent par α-CaSiO₃, que l'on trouve couramment à l'état naturel ; et la pseudo-wollastonite ou β-CaSiO₃. De manière plus préférentielle, on utilise la wollastonite α-CaSiO₃

En plus des ingrédients obligatoires a), b), c), d), e), g), h), i) et j) spécifiés ci-avant, les compositions selon la présente invention peuvent contenir éventuellement en outre un ou plusieurs additif(s) auxilliaire(s) f) tel(s) que notamment : au moins un produit dit "antistructure" f1) ; et/ou au moins une résine polysiloxane f2) ; et/ou au moins un agent de stabilisation f3) ; et/ou au moins un agent de couplage f4) ; et/ou au moins un pigment f5) pour fabriquer des fils et des câbles colorés ; et/ou au moins un composé à base de bore f6).

Conformément à une disposition préférée de l'invention, on vise des compositions vulcanisables à chaud en élastomères silicones qui contiennent, sur la base de 100 parties en poids de polymère(s) polyorganosiloxane(s) a) :
- de 15 à 100 parties de charge(s) de renforcement b),
- de 0,2 à 8 parties de péroxyde organique c),
- de 0,5 à 30 parties de mica d),
- de 0,2 à 10 parties d'oxyde de zinc e),
- de 0 à 15 parties d'additif(s) auxilliaire(s) f),
- de 0,0010 à 0,02 parties d'ingrédient g) exprimé en poids de platine métal (élémentaire) (soit 10 ppm à 200 ppm),
- de 0,5 à 10 parties d'oxyde de titane h),
- de 20 à 100 parties de charge(s) de bourrage i), et
- de 0,5 à 10 parties d'espèce(s) j) appartenant au groupe de la wollastonite.

Conformément à une disposition plus préférée de l'invention, on vise des compositions vulcanisables à chaud en élastomères silicones qui contiennent, sur la base de 100 parties en poids de polymère(s) polyorganosiloxane(s) a) :
- de 30 à 50 parties de charge(s) de renforcement b),
- de 0,5 à 6 parties de péroxyde organique c),
- de 1 à 12 parties de mica d),
- de 2 à 6 parties d'oxyde de zinc e),
- de 0 à 12 parties d'additif(s) auxilliaire(s) f),
- de 0,0015 à 0,015 parties d'ingrédient g) exprimé en poids de platine métal (élémentaire) (soit 15 ppm à 150 ppm),
- de 1 à 5 parties d'oxyde de titane h),
- de 30 à 80 parties de charge(s) de bourrage i), et
- de 2 à 6 parties d'espèce(s) j) appartenant au groupe de la wollastonite.

Conformément à une disposition "très préférée" de l'invention permettant de conférer aux fils ou câbles électriques un comportement au feu pour lequel la norme NF C 32-070 CR1 est satisfaite à la fois sous 500 volts et sous 1000 volts, on vise des compositions vulcanisables à chaud en élastomères silicones qui contiennent, sur la base de 100 parties en poids de polymère(s) polyorganosiloxane(s) a) :
- de 30 à 40 parties de charge(s) de renforcement b),
- de 1 à 5 parties de péroxyde organique c),
- de 7 à 12 parties de mica d),
- de 4 à 6 parties d'oxyde de zinc e),
- de 5 à 10 parties d'additif(s) auxilliaire(s) f),
- de 0,0018 à 0,01 parties d'ingrédient g) exprimé en poids de platine métal (élémentaire) (soit 18 ppm à 100 ppm),
- de 3 à 5 parties d'oxyde de titane h),
- de 70 à 80 parties de charge(s) de bourrage i), et
- de 3 à 6 parties d'espèce(s) j) appartenant au groupe de la wollastonite.

Selon une autre présentation où les quantités des divers ingrédients sont exprimées cette fois en % en poids par rapport au poids total des compositions, les compositions "très préférées" de l'invention contiennent (la somme des ingrédients devant être égale dans chaque cas à 100 % en poids) :
- polyorganosiloxane(s) a) : 40 à 50 %,
- charge(s) de renforcement b) : 12 à 20 %,
- péroxyde organique c) : 0,4 à 2,5 %,
- mica d) : 2,8 à 6 %,
- oxyde de zinc e) : 1,6 à 3 %,
- additif(s) auxilliaire(s) f) : 2 à 5 %,
- platine métal g) : 0,0007 à 0,005 %,
- oxyde de titane h) : 1,2 à 2,5 %,
- charge(s) de bourrage i) : 28 à 40 %,
- espèce(s) du groupe de la wollastonite j) : 1,2 à 3 %.

Pour en revenir à (aux) additif(s) auxilliaire(s) f), quand on en utilise un ou plusieurs, il(s) est(sont) représenté(s) plus précisément par [pour 100 parties en poids de polymère(s) polyorganosiloxane(s) a)] :
- 0,1 à 15 parties en poids d'un produit dit "antistructure" f1) à base d'huile(s) polydiméthylsiloxane(s) de viscosité comprise entre 10 et 3000 mPa.s à 25°C et bloquée(s) à chaque extrémité de chaîne par des groupements hydroxy et/ou d'huile(s) poly(méthylvinyl)siloxane de viscosité comprise entre 10 et 1000 mPa.s à 25°C et bloquée(s) à chaque extrémité de chaîne par des groupements hydroxy ; et/ou
- 0,1 à 5 parties de résine(s) polysiloxane(s) f2) représentée(s) par : des résines dites MQ comprenant essentiellement des unités R²₃SiO_{0.5} et SiO₂ dans lesquelles R² représente des groupements hydrocarbonés monovalents éventuellement halogénés ayant moins de 7 atomes de carbone, le rapport pondéral R²₃SiO_{0.5} sur SiO₂ étant compris entre 0,5/1 et 1/2/1 ; des résines M'Q comprenant essentiellement des unités HR²₂SiO_{0,5} et SiO₂ dans lesquelles R² a la signification donnée ci-dessus, le rapport pondéral HR²₂SiO_{0,5} sur SiO₂ étant compris entre 0,5/1 et 10/1 ; et/ou
- 0,01 à 4 parties d'agent(s) de stabilisation f3) tels que notamment : un sel métallique d'acide organique, comme un sel de fer ou de cérium, par exemple l'octoate de fer
ou de cérium (proportions allant plus spécifiquement de 0,01 à 0,06 partie) ; un oxyde de cérium, un hydroxyde de cérium, un oxyde de fer (proportions allant plus spécifiquement de 0,1 à 4 parties) ; l'oxyde CaO, l'oxyde MgO (proportions allant plus spécifiquement de 0,01 à 0,4 parties ; et/ou
- 0,01 à 2 parties d'agent(s) de couplage f4) à base de méthacryloxyalkyltrialkoxysilane et/ou d'acryloxyalkyltrialkoxysilane, où la partie alkyle possède 1 à 3 atomes de carbone ; et/ou
- 0,01 à 5 parties de pigment(s) coloré(s) f5) ; et/ou
- 0,01 à 3 parties de composé(s) f6) à base de bore, comme l'acide borique et ses dérivés, par exemple du type ester d'alkyle ayant de 1 à 3 atomes de carbone ;
- la quantité totale d'additif(s), quand on en utilise un ou plusieurs, devant être égale : à 15 parties en poids dans le cas des compositions dites "préférées" ; à 12 parties dans le cas des compositions dites "plus préférées" ; et à 10 parties dans le cas des compositions dites "très préférées".

Pour la préparation des compositions selon l'invention, les divers ingrédients sont intimement mélangés au moyen des dispositifs bien connus dans l'industrie des élastomères silicones, l'ordre d'incorportation pouvant être quelconque. Il est toutefois avantageux de disperser dans un premier temps, dans le (ou les) polyorganosiloxane(s) a), dans l'ordre par exemple donné ci-après, les ingrédients constitutifs : possible(s) additif(s) f3) et f6), puis charge(s) de bourrage i), puis espèce(s) du groupe de la wollastonite j), puis mica d), puis oxyde de zinc e), puis ingrédient g) à base de Pt, puis oxyde de titane h), puis possible(s) additif(s) f1), f2) et f4), puis charge(s) de renforcement b) en plusieurs fois ; à ce mélange on ajoute ensuite la quantité désirée de catalyseur c) et le possible additif f5).

En outre l'invention, dans un second objet, porte sur l'utilisation des compositions polyorganosiloxanes qui viennent d'être décrites pour la réalisation, notamment, des enveloppes ou isolants primaires des monoconducteurs entrant dans la constitution des fils ou câbles électriques protégés contre l'incendie.

L'invention, dans un troisième objet, porte sur les fils ou câbles électriques qui sont fabriqués moyennant l'utilisation des compositions polyorganosiloxanes selon le premier objet de l'invention.

Dans le cadre de pareille utilisation, le dépôt d'une composition selon l'invention autour de chaque monoconducteur peut s'effectuer selon les procédés usuels, notamment par des procédés d'extrusion. Le dépôt ainsi obtenu est ensuite réticulé par chauffage pour conduire à la formation de l'isolant primaire en élastomère silicone. La durée du chauffage varie évidemment avec la température de la matière et la pression éventuelle de travail. Elle est généralement de l'ordre de quelques à plusieurs minutes vers 100°C - 120°C et de quelques secondes vers 180 - 200°C. Il est possible de déposer plusieurs couches conjointement à l'aide d'une extrusion en tandem équipée par exemple d'une tête d'équerre ou d'une co-extrusion.

On va expliquer la présente invention de façon plus détaillée à l'aide des exemples indiqués ci-après.

### EXEMPLE 1 et EXEMPLE COMPARATIF A :

### 1. Composition selon l'invention (toutes les parties sont données en poids) :

### 1.1 - Préparation :

Dans un pétrin malaxeur à bras en Z, on mélange pendant 2 heures à température ambiante (23°C) :
- 97,2 parties d'un polyorganosiloxane a) qui est un poly(diméthyl)(méthylvinyl)-siloxane bloqué à chacune de ses deux extrémités par un motif diméthylvinylsiloxy, contenant, en bouts de chaîne, 120 parties par million (ppm) de groupes vinyles (Vi) et, dans la chaîne, 450 ppm de groupes Vi, ayant une viscosité de 20 millions de mPa.s à 25°C ;
- 2,8 parties d'un polyorganosiloxane a) qui est un polydiméthylsiloxane bloqué à chacune de ses deux extrémités par un motif diméthylvinylsiloxy, contenant 120 ppm de groupes Vi, ayant une viscosité de 20 millions de mPa.s à 25°C ;
- 0,29 parties d'oxyde de calcium f3) ;
- 0,04 parties d'octoate de fer f3) ;
- 1,69 parties de Ce(OH)₄ f3 ;
- 39,08 parties de quartz broyé i), commercialisé par la Société SIFRACO (Paris, France) sous la dénomination E600 ;
- 4,76 parties de wollastonite α-CaSiO₃ j) ;
- 1,53 parties de mica de type muscovite d) ;
- 3,80 parties d'oxyde de zinc e) ;
- 0,0021 parties de platine métal g), apporté sous la forme d'une solution dans le divinyltétraméthyldisiloxane d'un complexe du platine à 10 % en poids de platine ligandé par du divinyltétraméthyldisiloxane (complexe de karstedt) ;
- 1,55 parties de TiO₂ de combustion h) :
- 3,80 parties d'une huile polydiméthylsiloxane f1) bloquée à ses deux extrémités par des motifs diméthylhydroxysiloxy, contenant 9 % en poids d'OH, de viscosité 50 mPa.s à 25°C ;
- 3,04 parties d'une huile poly(méthyvinyl)siloxane f1) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
- 30,4 parties de silice de combustion traitée D4 (octaméthylcyclotétrasiloxane) b) de surface spécifique de 200 m²/g ;
- 15,7 parties de silice de combustion b) de surface spécifique de 150 m²/g.

Le mélange obtenu ci-avant est alors travaillé sur un malaxeur à 2 cylindres et on lui ajoute :
- 2,58 parties de péroxyde de 2,4-dichlorobenzoyle c).

### 1.2.- Caractérisation de la composition :

(i) Une fraction de la masse homogène obtenue sur le malaxeur est utilisée pour mesurer les propriétés mécaniques de l'élastomère silicone résultant de la vulcanisation à chaud de la composition polyorganosiloxane. Pour ce faire, la fraction de masse homogène retenue à cet effet est alors vulcanisée pendant 8 minutes à 115°C, en opérant dans un moule approprié permettant d'obtenir des plaques de 2 mm d'épaisseur. On obtient ainsi des plaques à l'état non recuit (NR). On soumet ensuite une fraction des plaques à un recuit ou vieillissement ( R) de 10 jours à 200°C. On prélève ensuite dans l'ensemble de ces plaques des échantillons normalisés et mesure les propriétés suivantes :
   - dureté Shore A (DSA) selon la norme DIN 53505,
   - résistance à la rupture (R/R) en MPa selon la norme AFNOR NF T 46002,
   - allongement à la rupture (A/R) en % selon la norme précédente,
   - module élastique (ME) à 100 % en Mpa selon la norme précédente.

   On mesure encore la densité de l'élastomère silicone à l'état NR en opérant selon les indications de la norme AFNOR NF T 46030.
(2i) Une autre fraction de la masse homogène obtenue sur le malaxeur est découpée sous forme de bandes qui vont alimenter l'extrudeuse mise en oeuvre pour la fabrication d'un câble électrique. La fabrication du câble est une construction standard consistant à réaliser un câble de 2,8 mm de diamètre comprenant un monoconducteur en cuivre de 1,05 mm de diamètre, autour duquel est installé une enveloppe ou isolant primaire en élastomère silicone ayant une épaisseur de 0,875 mm, qui est obtenu en soumettant le monoconducteur revêtu de la composition polyorganosiloxane homogène précitée à une vulcanisation opérée dans un four à air chaud, à une température de l'ordre de 250°C (procurant une température matière de l'ordre de 130°C - 140°C), pendant 46 secondes. On a été amené à fabriquer aussi un câble de 4,55 mm de diamètre comprenant le même monoconducteur équipé d'un isolant primaire ayant une épaisseur double de 1,75 mm. On prélève ensuite sur le câble des échantillons normalisés et mesure les propriétés suivantes :
   - opacité des fumées selon la norme CEI 1034, partie 1, en % de transmission de lumière,
   - cohésion des cendres sous 500 volts et sous 1000 volts selon la norme NF C 32-070 CR1.

Les résultats obtenus sont reportés sur le tableau qui apparaît ci-après à la fin de l'exemple 2.

### 2. Composition de l'exemple comparatif A :

### 2.1. Préparation :

Dans un pétrin malaxeur à bras en Z, on mélange pendant 2 heures à température ambiante (23°C) :
- 45,4 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes Vi, ayant une viscosité de 20 millions de mPa.s à 25°C ;
- 50,9 parties d'un polyorganosiloxane a) qui est un poly(diméthyl)(méthylvinyl)-siloxane bloqué à chacune de ses deux extrémités par un motif diméthylvinylsiloxy, contenant, en bouts de chaîne, 120 ppm de groupes Vi et, dans la chaîne, 450 ppm de groupes Vi, ayant une viscosité de 20 millions de mPa.s à 25°C;
- 3,7 parties d'un polyorganosiloxane a) qui est un polydiméthylsiloxane bloqué à chacune de ses deux extrémités par un motif diméthylvinylsiloxy, contenant 120 ppm de groupes Vi, ayant une viscosité de 20 millions de mPa.s à 25 °C;
- 0,15 parties d'oxyde de calcium f3) ;
- 0,05 parties d'octoate de fer f3) ;
- 2,72 parties de Ce(OH)₄ f3) ;
- 47,72 parties de quartz broyé i), commercialisé par la Société SIFRACO (Paris, France) sous la dénomination E600 ;
- 13,76 parties de mica de type muscovite d) ;
- 7,49 parties d'oxyde zinc e) ;
- 0,0029 parties de platine métal g), apporté sous la forme d'une solution dans le divinyltétraméthyldisiloxane d'un complexe du platine à 10 % en poids de platine ligandé par du divinyltétraméthyldisiloxane (complexe de Karstedt) ;
- 3,77 parties de TiO₂ de combustion h) ;
- 3,81 parties d'une huile polydiméthylsiloxane f1) bloquée à ses deux extrémités par des motifs diméthylhydroxysiloxy, contenant 9 % en poids d'OH, de viscosité 50 mPa.s à 25°C ;
- 1,49 parties d'une huile d'huile poly(méthyvinyl)siloxane f1) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
- 0,18 parties de gammaméthacryloxypropyltriméthoxysilane f4) ;
- 27,33 parties de silice de combustion traitée D4 (octaméthylcyclotétrasiloxane) b) de surface spécifique de 200 m²/g ;
- 17,25 parties de silice de combustion b) de surface spécifique de 150 m²/g.

Le mélange obtenu ci-avant est alors travaillé sur un malaxeur à 2 cylindres et on lui ajoute :
- 2,83 parties de péroxyde de 2,4-dichlorobenzoyle c).

### 2.2. Caractérisations de la composition :

On opère comme indiqué ci-avant au § 1.2.

### EXEMPLE 2 :

### 1. Préparation d'une composition "très préférée" selon l'invention :

Dans un pétrin malaxeur à bras en Z, on mélange pendant 2 heures à température ambiante (23°C) :
- 33,0 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes Vi, ayant une viscosité de 20 millions de mPa.s à 25°C ;
- 67,0 parties d'un polyorganosiloxane a) qui est un polydiméthylsiloxane bloqué à chacune de ses deux extrémités par un motif diméthylvinylsiloxy, contenant 120 ppm de groupes Vi ayant une viscosité de 20 millions de mPa.s à 25°C ;
- 0,27 parties d'oxyde de calcium f3) ;
- 0,049 parties d'octoate de fer f3) ;
- 2,96 parties de Ce(OH)₄ f3) ;
- 79,1 parties de quartz broyé i), commercialisé par la Société SIFRACO (Paris, France) sous la dénomination E600 ;
- 3,30 parties de wollastonite α-CaSiO3 j) ;
- 9,95 parties de mica de type muscovite d) ;
- 4,85 parties d'oxyde zinc e) ;
- 0,0061 parties de platine métal g), apporté sous la forme d'une solution dans le divinyltétraméthyldisiloxane d'un complexe du platine à 10 % en poids de platine ligandé par du divinyltétraméthyldisiloxane (complexe de Karstedt) ;
- 3,64 parties de TiO₂ de combustion h) ;
- 2,91 parties d'une huile polydiméthylsiloxane f1) bloquée à ses deux extrémités par des motifs diméthylhydroxysiloxy, contenant 9 % en poids d'OH, de viscosité 50 mPa.s à 25°C ;
- 1,70 parties d'une huile d'huile poly(méthyvinyl)siloxane f1) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
- 18,44 parties de silice de combustion traitée D4 (octaméthylcyclotétrasiloxane) b) de surface spécifique de 200 m²/g ;
- 14,56 parties de silice de combustion b) de surface spécifique de 150 m²/g.

Le mélange obtenu ci-avant est alors travaillé sur un malaxeur à 2 cylindres et on lui ajoute :
- 3 parties de péroxyde de 2,4-dichlorobenzoyle c).

### 2. Caractérisations de la composition :

On opère comme indiqué ci-avant au § 1.2. de l'exemple 1.

Le tableau donné ci-après rassemble les résultats obtenus.

**TABLEAU**

| | Exemple comparatif A | Exemple 1 | Exemple 2 |
|---|---|---|---|
| Propriétés mécaniques NR | | | |
| DSA | 71 | 68 | 71 |
| R/R (MPa) | 7,3 | 8 | 7 |
| A/R(%) | 188 | 220 | 230 |
| ME 100 (Mpa) | 4,2 | 3,9 | 3,7 |

| Propriétés mécaniques R | | | |
|---|---|---|---|
| DSA | 75 | 74 | 72 |
| R/R (MPa) | 7 | 7,2 | 6,8 |
| A/R (%) | 135 | 160 | 180 |
| ME 100 (Mpa) | 5 | 4,7 | 4,1 |
| Densité NR | 1,41 | 1,36 | 1,5 |
| Opacité des fumées (% de transmission) | 91 % | 94 % | 94 % |
| Cohésion des cendres sous 500 volts (temps en minutes) | 79 | > 90 | > 90 |
| Cohésion des cendres sous 1000 volts épaisseur = 0,875 mm | 29 | 31 | 36 |
| Cohésion des cendres sous 1000 volts épaisseur double = 1,75 mm | 43 | 37 | > 65 |

## Revendications

1. Compositions polyorganosiloxanes vulcanisables à chaud en élastomères silicones qui contiennent
a) au moins un polymère polyorganosiloxane,
b) au moins une charge de renforcement,
c) un péroxyde organique,
d) du mica,
e) de l'oxyde de zinc,
f) éventuellement au moins un additif habituellement utilisé dans le domaine des compositions polyorganosiloxanes vulcanisables à chaud,
lesdites compositions étant **caractérisées en ce qu'**elles contiennent en plus, à titre d'autres ingrédients obligatoires :
g) du platine, un composé du platine et/ou un complexe du platine,
h) de l'oxyde de titane,
i) au moins une charge de bourrage, et
j) au moins une espèce minérale appartenant au groupe de la wollastonite.

2. Compositions selon la revendication 1, **caractérisées en ce qu'**elles contiennent, sur la base de 100 parties en poids de polymère(s) polyorganosiloxane(s) a) :
- de 15 à 100 parties de charge(s) de renforcement b),
- de 0,2 à 8 parties de péroxyde organique c),
- de 0,5 à 30 parties de mica d),
- de 0,2 à 10 parties d'oxyde de zinc e),
- de 0 à 15 parties d'additif(s) auxilliaire(s) f),
- de 0,0010 à 0,02 parties d'ingrédient g) exprimé en poids de platine métal (élémentaire) (soit 10 ppm à 200 ppm),
- de 0,5 à 10 parties d'oxyde de titane h),
- de 20 à 100 parties de charge(s) de bourrage i), et
- de 0,5 à 10 parties d'espèce(s) j) appartenant au groupe de la wollastonite.

3. Compositions selon les revendications 1 ou 2, **caractérisées en ce que** l'ingrédient a) consiste dans au moins un polymère polyorganosiloxane contenant de 0 à 4 % en poids de groupes vinyles et possédant une viscosité supérieure à 1 million de mPa.s à 25°C.

4. Compositions selon l'une quelconque des revendications 1 à 3, **caractérisées en ce que** l'ingrédient b) consiste dans la silice, l'alumine ou un mélange de ces deux espèces.

5. Compositions selon l'une quelconque des revendications 1 à 4, **caractérisées en ce que** l'ingrédient i) consiste dans au moins une silice cristalline.

6. Compositions selon l'une quelconque des revendications 1 à 5, **caractérisées en ce que** l'ingrédient j) consiste dans au moins une espèce choisie parmi : le métasilicate de calcium (CaSiO3) ou wollastonite ; le métasilicate mixte de calcium et de sodium (NaCa₂HSi₃O₉) ou pectolite ; et le métasilicate mixte de calcium et de manganèse [CaMn(SiO₃)₂] ou bustamite.

7. Compositions selon l'une quelconque des revendications 1 à 6, **caractérisées en ce que** l'ingrédient facultatif f), quand on en utilise un, consiste dans : au moins un produit dit "antistructure" f1) ; et/ou au moins une résine polysiloxane f2) ; et/ou au moins un agent de stabilisation f3) ; et/ou au moins un agent de couplage f4) ; et/ou au moins un pigment coloré f5) ; et/ou au moins un composé à base de bore f6).

8. Utilisation d'une composition selon l'une quelconque des revendications 1 à 7 pour la réalisation d'enveloppe ou isolant primaire de monoconducteur(s) entrant dans la constitution de fils ou câbles électriques protégés contre l'incendie, qui consiste à opérer le dépôt de ladite composition autour de chaque monoconducteur, puis à la faire réticuler en élastomère silicone par un chauffage procurant une température matière allant de 100°C à 200°C.

9. Fils ou câbles électriques protégés contre l'incendie fabriqués moyennant l'utilisation selon la revendication 8 d'une composition selon l'une quelconque des revendications 1 à 7.

10. Fils ou câbles électriques selon la revendication 9, **caractérisés en ce que** :
(1) ils offrent une amélioration de la réduction de l'opacité de fumées permettant d'atteindre l'objectif de plus de 91 % de transmission de la lumière selon la norme CEI 1034, partie 1 ; (2) ils satisfont à la norme NFC 32-070 CR1 sous 500 volts avec un temps de fonctionnement allongé de plus de 30 % par rapport au seuil de 65 minutes requis par la norme ; et (3) ils peuvent satisfaire à la (norme NFC 32-070 CR1 sous 1000 volts.

## Patentansprüche

1. Polyorganosiloxan-Zusammensetzungen, die zu Siliconelastomeren hitzehärtbar sind, enthaltend
a) mindestens ein Polyorganosiloxan-Polymer,
b) mindestens einen Verstärkungsfüllstoff,
c) ein organisches Peroxid,
d) Glimmer,
e) Zinkoxid,
f) gegebenenfalls mindestens einen Zusatzstoff, der üblicherweise auf dem Gebiet der hitzehärtbaren Polyorganosiloxan-Zusammensetzungen verwendet wird,
wobei die Zusammensetzungen **dadurch gekennzeichnet sind, dass** sie außerdem als andere obligatorische Ingredenzien
g) Platin, eine Platinverbindung und/oder einen Platinkomplex,
h) Titanoxid,
i) mindestens einen Dichtungsfüllstoff und
j) mindestens eine Mineralart, die zur Gruppe des Wollastonits gehört, enthalten.

2. Zusammensetzungen nach Anspruch 1, **dadurch gekennzeichnet, dass** sie, bezogen auf 100 Gew.Teile Polyorganosiloxan-Polymer(e) a), enthalten:
- 15 bis 100 Teile Verstärkungsfüllstoff(e) b),
- 0,2 bis 8 Teile organisches Peroxid c),
- 0,5 bis 30 Teile Glimmer d),
- 0,2 bis 10 Teile Zinkoxid e),
- 0 bis 15 Teile Hilfszusatzstoff(e) f),
- 0,0010 bis 0,02 Teile Ingredienz g), ausgedrückt als Gewicht von Platinmetall (elementar) (oder 10 ppm bis 200 ppm),
- 0,5 bis 10 Teile Titanoxid h),
- 20 bis 100 Teile Dichtungsfüllstoff(e) i) und
- 0,5 bis 10 Teile Art (Arten) j), die zur Gruppe des Wollastonits gehört (gehören).

3. Zusammensetzungen nach Anspruch 1 oder Anspruch 2, **dadurch gekennzeichnet, dass** das Ingredienz a) aus mindestens einem Polyorganosiloxan-Polymer besteht, das 0 bis 4 Gew.% Vinylgruppen enthält und bei 25°C eine Viskosität von über 1 Million mPa.s besitzt.

4. Zusammensetzungen nach einem der Ansprüche 1 bis 3, **dadurch gekennzeichnet, dass** das Ingredienz b) aus Siliciumdioxid, Aluminiumoxid oder einem Gemisch dieser zwei Arten besteht.

5. Zusammensetzungen nach einem der Ansprüche 1 bis 4, **dadurch gekennzeichnet, dass** das Ingredienz i) aus mindestens einem kristallinen Siliciumdioxid besteht.

6. Zusammensetzungen nach einem der Ansprüche 1 bis 5, **dadurch gekennzeichnet, dass** das Ingredienz j) aus mindestens einer Art, ausgewählt aus: Calciummetasilikat (Ca-SiO₃) oder Wollastonit, dem gemischten Metasilikat von Calcium und Natrium (NaCa₂HSi₃O₉) oder Pektolith und dem gemischten Silikat von Calcium und Mangan [CaMn(SiO₃)₂] oder Bustamit, besteht.

7. Zusammensetzungen nach einem der Ansprüche 1 bis 6, **dadurch gekennzeichnet, dass** das fakultative Ingredienz f), wenn es verwendet wird, aus: mindestens einem sogenannten "Antistruktur"-Produkt f1) und/oder mindestens einem Polysiloxanharz f2) und/oder mindestens einem Stabilisierungsmittel f3) und/oder mindestens einem Kupplungsmittel f4) und/oder mindestens einem gefärbten Pigment f5) und/oder mindestens einer Verbindung auf der Basis von Bor f6) besteht.

8. Verwendung einer Zusammensetzung nach einem der Ansprüche 1 bis 7 zur Herstellung einer Ummantelung oder Primärisolierung für einadrige (einen einadrigen) Leiter, die/der beim Aufbau von elektrischen Leitungen oder elektrischen Kabeln, die gegen Feuer geschützt sind, involviert sind/ist, wobei diese darin besteht, die Abscheidung der Zusammensetzung um jeden einadrigen Leiter durchzuführen, dann eine Vernetzung zum SilikonPolymer durch Erhitzen durchzuführen, welches für eine Materialtemperatur von 100°C bis 200°C sorgt.

9. Elektrische Leitungen oder elektrische Kabel, die gegen Brand geschützt sind und mittels Verwendung nach Anspruch 8 einer Zusammensetzung nach einem der Ansprüche 1 bis 7 hergestellt sind.

10. Elektrische Leitungen oder elektrische Kabel nach Anspruch 9, **dadurch gekennzeichnet, dass** sie (1) eine Verbesserung bei der Verringerung der Opazität von Rauch bieten, wodurch eine Lichtdurchlässigkeit von über 91 % entsprechend der Norm CEI 1034, Teil 1 erreicht wird; (2) sie entsprechend der Norm NFC 32-070 CR1 unter 500 V bei einer Betriebszeit, die bezüglich der Grenze von 65 min, die von der Norm gefordert wird, um 30 % verlängert ist; und (3) sie der Norm NFC 32-070 CR1 unter 1000 V entsprechen können.

## Claims

1. Heat-curable polyorganosiloxane compositions made of silicon elastomers, which contain:
a) at least one polyorganosiloxane polymer;
b) at least one reinforcing filler;
c) an organic peroxide;
d) mica;
e) zinc oxide;
f) optionally, at least one additive normally used in the field of heat-curable polyorganosiloxane compositions;
the said compositions being **characterized in that** they furthermore contain, as other necessary ingredients:
g) platinum, a platinum compound and/or a platinum complex;
h) titanium oxide;
i) at least one bulking filler; and
j) at least one mineral species belonging to the wollastonite group.

2. Compositions according to Claim 1, **characterized in that** they contain, on the basis of 100 parts by weight of polyorganosiloxane polymer(s) a):
- from 15 to 100 parts of reinforcing filler(s) b) ;
- from 0.2 to 8 parts of organic peroxide c);
- from 0.5 to 30 parts of mica d);
- from 0.2 to 10 parts of zinc oxide e);
- from 0 to 15 parts of auxiliary additive(s) f);
- from 0.0010 to 0.02 parts of ingredient g) expressed by weight of platinum metal (elemental platinum) (i.e. 10 ppm to 200 ppm);
- from 0.5 to 10 parts of titanium oxide h);
- from 20 to 100 parts of bulking filler(s) i); and
- from 0.5 to 10 parts of one or more species j) belonging to the wollastonite group.

3. Compositions according to either of Claims 1 and 2, **characterized in that** ingredient a) consists of at least one polyorganosiloxane polymer containing from 0 to 4% by weight of vinyl groups and possessing a viscosity of greater than 1 million mPa.s at 25°C.

4. Compositions according to any one of Claims 1 to 3, **characterized in that** ingredient b) consists of silica, alumina or a mixture of these two species.

5. Compositions according to any one of Claims 1 to 4, **characterized in that** ingredient i) consists of at least one crystalline silica.

6. Compositions according to any one of Claims 1 to 5, **characterized in that** ingredient j) consists of at least one species chosen from: calcium metasilicate (CaSiO₃) or wollastonite; sodium calcium mixed metasilicate (NaCa₂HSi₃O₉) or pectolite; and calcium manganese mixed metasilicate [CaMn(SiO₃)₂] or bustamite.

7. Compositions according to any one of Claims 1 to 6, **characterized in that** the optional ingredient f), when one such is used, consists of: at least one "anti-structure" product f1); and/or at least one polysiloxane resin f2); and/or at least one stabilizer f3); and/or at least one coupling agent f4); and/or at least one coloured pigment f5); and/or at least one boron-based compound f6).

8. Use of a composition according to any one of Claims 1 to 7 for the production of the primary jacket or insulation of one or more monoconductors used for making up fire-resistant electrical wires or cables, which consists in depositing the said composition around each monoconductor and then crosslinking the composition into a silicone elastomer by heating the material to a temperature ranging from 100°C to 200°C.

9. Fire-resistant electrical wires or cables manufactured through the use according to Claim 8 of a composition according to any one of Claims 1 to 7.

10. Electrical wires or cables according to Claim 9, **characterized in that**: (1) they offer an improvement in the reduction of smoke density, making it possible to achieve the objective of more than 91% light transmission according to the IEC 1034 standard, part 1; (2) they meet the NFC 32-070 CR1 standard under 500 volts with an operating time extended by more than 30% over the 65 minute threshold required by the standard; and (3) they may meet the NFC 32-070 CR1 standard under 1000 volts.
